# EUROPÄISCHE PATENTANMELDUNG

(11) **EP 4 740 724 A1**
(43) Veröffentlichungstag der Anmeldung: **13.05.2026**
(21) Anmeldenummer: 25206282.3
(22) Anmeldetag: 02.10.2025
(51) Int. Cl.: A01D 41/127

(54) **VERFAHREN ZUR STEUERUNG EINER LANDWIRTSCHAFTLICHEN ARBEITSMASCHINE**

(30) Priorität: 06.11.2024 DE 102024132342
(71) Anmelder: CLAAS Selbstfahrende Erntemaschinen GmbH, 33428 Harsewinkel (DE)
(72) Erfinder: Thiesmann, Waldemar, 49080 Osnabrück (DE); Bormann, Bastian, 33334 Gütersloh (DE); Spiekermann, Sebastian, 48346 Ostbevern (DE); Meyer zu Helligen, Lars Peter, 32139 Spenge (DE)
(74) Vertreter: CLAAS Gruppe

(57) **Zusammenfassung**

Die vorliegende Erfindung betrifft ein Verfahren zur Steuerung zumindest einer ein Erntevorsatzgerät (4, 16) zum Aufnehmen von Erntegut und ein Spurführungssystem (11) umfassenden landwirtschaftlichen Arbeitsmaschine (1, 15), wobei von der landwirtschaftlichen Arbeitsmaschine (1, 15) in einem Territorium (2) abzufahrende Fahrspuren (3a, 3b, ..., 3n, 8) von einem Routenplanungssystem (10) in Abhängigkeit von der Arbeitsbreite (5, 17) des Erntevorsatzgerätes (4, 16) generiert werden, wobei das Routenplanungssystem (10) die Fahrspuren (3a, 3b, ..., 3n) generiert, in denen das Erntevorsatzgerät (4, 16) in einem ersten Modus, in welchem im Wesentlichen die volle Arbeitsbreite (5, 17) des Erntevorsatzgerät (4, 16) verwendet wird, und die Fahrspuren (8), in denen das Erntevorsatzgerät (4, 16) in einem zweiten Modus, in dem eine Teilarbeitsbreite des Erntevorsatzgerät (4, 16) verwendet wird, betrieben wird, wobei das Territorium (2) durch das Routenplanungssystem (10) bei der Fahrspurplanung in zumindest ein im ersten Modus zu bearbeitendes Territorium (2a) und wenigstens ein im zweiten Modus zu bearbeitendes Restflächenterritorium (7) unterteilt wird, **dadurch gekennzeichnet,** dass durch das Routenplanungssystem (10) diejenigen Fahrspuren (8) des Restflächenterritoriums (7) identifiziert werden, auf welchen das Erntevorsatzgerät (4, 16) im zweiten Modus betrieben wird, und dass durch das Routenplanungssystem (10) eine Änderung der Ausrichtung relativ zur jeweils identifizierten Fahrspur (8) der landwirtschaftlichen Arbeitsmaschine (1, 15) in dem Restflächenterritorium (7) in der Weise bewirkt wird, dass das aufzunehmende Erntegut im wenigstens einen Restflächenterritorium (7) dem Erntevorsatzgerät (4, 16) im Wesentlichen mittig zugeführt wird.

## Beschreibung

Die vorliegende Erfindung betrifft ein Verfahren zur Steuerung zumindest einer ein Erntevorsatzgerät zum Aufnehmen von Erntegut und ein Spurführungssystem umfassenden landwirtschaftlichen Arbeitsmaschine gemäß dem Oberbegriff des Anspruches 1 sowie ein Routenplanungssystem gemäß dem Oberbegriff des Anspruches 13. Weiterhin ist eine landwirtschaftliche Arbeitsmaschine Gegenstand der vorliegenden Erfindung.

Aus der EP 4 118 943 A1 ist ein Verfahren zum Planen einer Feldbearbeitungsroute durch ein Fahrerassistenzsystem einer landwirtschaftlichen Arbeitsmaschine bekannt. In einem landwirtschaftlichen Territorium durch eine landwirtschaftliche Arbeitsmaschine abzufahrende Bahnen weisen in der Regel einen nur anteilig parallelen Verlauf zu einer Bearbeitungsgrenze auf. Territorien weisen in der Regel eine oder mehrere Bearbeitungsgrenzen auf, die von einem geradlinigen Verlauf abweichen, was eine Anpassung der abzufahrenden Bahnen erfordert. Hierbei wird ein Algorithmus zur Begradigung von gekrümmt oder geknickt verlaufenden Bahnen durchgeführt, mit dem Ziel die Anzahl abzufahrender Bahnen mit einer vom geraden Verlauf abweichenden Kontur zu minimieren. Dazu werden zwischen oder benachbart zu Bahnen mit einem geraden Verlauf mit einem gekrümmten oder geknickten Verlauf verlaufende Bahnen durch eine sukzessive Anpassung begradigt. Dem Verfahren gemäß der EP 4 118 943 A1 liegt dabei zugrunde, die Anpassung der abzufahrenden Bahnen an gekrümmte oder geknickte Bahnen unter Berücksichtigung von Nutzerpräferenzen vorzunehmen, die ein Benutzer der Arbeitsmaschine mittels des Fahrerassistenzsystems vorgibt. Eine Nutzerpräferenz ist ein Überlapp auf dem zu bearbeitenden Territorium zwischen durch das Verfahren begradigten Bahnen, welcher beim Abfahren der begradigten Bahnen durch die Arbeitsmaschine doppelt bearbeitet bzw. überfahren wird. Der Überlapp tritt auf, indem bei der Begradigung Teilflächen mit Erntegut entstehen, die nur anteilig vom Erntevorsatzgerät der Arbeitsmaschine erfasst werden. Das Verfahren sieht dabei vor, dass benachbarte Bahnen, gerade sowie begradigte Bahnen, in Abhängigkeit von der Arbeitsbreite des Erntevorsatzgerät als im Wesentlichen parallel verlaufende Anschlussfahrten abgefahren werden, die sich an der Lage der vorherigen Bahn unter Berücksichtigung der Arbeitsbreite des Erntevorsatzgerätes orientieren. Daraus resultiert eine ungleichmäßige Aufnahme von Erntegut auf den Teilflächen des zu bearbeitenden Territoriums.

Ausgehend vom vorstehend genannten Stand der Technik liegt der Erfindung die Aufgabe zugrunde, ein Verfahren zur Steuerung zumindest einer ein Erntevorsatzgerät zum Aufnehmen von Erntegut und ein Spurführungssystem umfassenden landwirtschaftlichen Arbeitsmaschine bereitzustellen, durch welches eine verbesserte Aufnahme von Erntegut auf den Teilflächen eines zu bearbeitenden Territoriums erreicht wird.

Diese Aufgabe wird erfindungsgemäß durch ein Verfahren mit den Merkmalen des Anspruches 1 gelöst. Weiterhin wird die Aufgabe durch ein Routenplanungssystem mit den Merkmalen des nebengeordneten Anspruches 13 gelöst. Vorteilhafte Weiterbildungen sind Gegenstand der abhängigen Ansprüche.

Gemäß dem Anspruch 1 wird ein Verfahren zur Steuerung zumindest einer ein Erntevorsatzgerät zum Aufnehmen von Erntegut und ein Spurführungssystem umfassenden landwirtschaftlichen Arbeitsmaschine vorgeschlagen, wobei von der landwirtschaftlichen Arbeitsmaschine in einem Territorium abzufahrende Fahrspuren von einem Routenplanungssystem in Abhängigkeit von der Arbeitsbreite des Erntevorsatzgerätes generiert werden. Das Routenplanungssystem generiert die Fahrspuren, in denen das Erntevorsatzgerät in einem ersten Modus, in welchem im Wesentlichen die volle Arbeitsbreite des Erntevorsatzgerät verwendet wird, und die Fahrspuren, in denen das Erntevorsatzgerät in einem zweiten Modus, in dem eine Teilarbeitsbreite des Erntevorsatzgerät verwendet wird, betrieben wird, wobei das Territorium durch das Routenplanungssystem bei der Fahrspurplanung in zumindest ein im ersten Modus zu bearbeitendes Territorium und wenigstens ein im zweiten Modus zu bearbeitendes Restflächenterritorium unterteilt wird. Erfindungsgemäß ist vorgesehen, dass durch das Routenplanungssystem diejenigen Fahrspuren des Restflächenterritoriums identifiziert werden, auf welchen das Erntevorsatzgerät im zweiten Modus betrieben wird, und dass durch das Routenplanungssystem eine Änderung der Ausrichtung relativ zur jeweils identifizierten Fahrspur der landwirtschaftlichen Arbeitsmaschine in dem wenigstens einen Restflächenterritorium in der Weise bewirkt wird, dass das aufzunehmende Erntegut im Restflächenterritorium dem Erntevorsatzgerät im Wesentlichen mittig zugeführt wird.

Durch die automatische Steuerung der Ausrichtung der landwirtschaftlichen Arbeitsmaschine relativ zur jeweils identifizierten Fahrspur auf dem wenigstens einen Restflächenterritorium wird eine ungleichmäßige respektive asymmetrische Aufnahme von Erntegut durch das Erntevorsatzgerät vermieden.

Die ungleichmäßige respektive asymmetrische Aufnahme von Erntegut gemäß dem Stand der Technik geht mit einer entsprechend einseitigen Belastung von nachgeordneten Arbeitsaggregaten der Arbeitsmaschine einher, welchen das vom Erntevorsatzgerät aufgenommene Erntegut zugeführt wird. Aus der einseitigen Belastung können erhöhte Erntegutverluste bereits bei der Aufnahme von Erntegut auftreten. Eine Erhöhung von Erntegutverlusten kann in Abhängigkeit von der Art der Arbeitsmaschine und ihrer Arbeitsaggregate auch bei den nachfolgenden Bearbeitungsschritten auftreten, die von den jeweiligen Arbeitsaggregaten auszuführen sind. Die einseitige Belastung kann zudem die Qualität von der Erntegutaufnahme nachfolgenden Bearbeitungsschritten beeinflussen, die von der Arbeitsmaschine selbst oder einer nachfolgend das Territorium bearbeitenden Arbeitsmaschine durchgeführt werden.

Das erfindungsgemäße Verfahren, durch welches das aufzunehmende Erntegut im Restflächenterritorium dem Erntevorsatzgerät im Wesentlichen mittig zugeführt wird, führt zu einer Steigerung der Leistung der Arbeitsmaschine, indem die Arbeitsbreite der Arbeitsmaschine selbst im Wesentlichen vollständig genutzt wird. Die Verwendung der im Wesentlichen vollen Arbeitsbreite des Erntevorsatzgerät kann bei reihenunabhängigen Erntevorsatzgeräten bedeuten, dass ein Bediener der Arbeitsmaschine eine individuelle Überlappung der Vorsatzbreite, z.B. 20 cm einstellt, um ein vollständiges Abtrennen der Pflanzen sicherzustellen.

Unter mittiger Zuführung ist eine bezogen auf die Längsachse der Arbeitsmaschine zentrierende Aufnahme des Erntegutes zu verstehen.

Die Arbeitsbreite der Arbeitsmaschine bestimmt sich dabei in Abhängigkeit von der Art der Arbeitsmaschine und ihrer Arbeitsaggregate. Beispielhaft hierfür seien selbstfahrende Mähdrescher oder Feldhäcksler als landwirtschaftliche Arbeitsmaschinen genannt. Durch die Routenplanung für das Restflächenterritorium werden die aus dem Stand der Technik bekannten Nachteile vermieden.

Insbesondere können die in dem Territorium abzufahrenden Fahrspuren durch einen Analysealgorithmus analysiert werden, wobei durch den Analysealgorithmus die Fahrspuren bestimmt werden, auf welchen das Erntevorsatzgerät im zweiten Modus betrieben wird.

Bevorzugt kann vorgesehen sein, dass das zu bearbeitete Territorium entsprechend seiner Bearbeitungsgrenzen in Abhängigkeit von der Arbeitsbreite des Erntevorsatzgerätes in zueinander parallele Fahrspuren unterteilt wird. Hierdurch kann der Anteil an Fahrspuren, in denen das Erntevorsatzgerät im ersten Modus betrieben wird, maximiert werden. Dabei kann der Verlauf der Fahrspuren, in denen das Erntevorsatzgerät im ersten Modus betrieben wird, der Kontur einer der Bearbeitungsgrenzen, vorzugsweise der Bearbeitungsgrenze, welche die geringsten Abweichungen von einem im Wesentlichen geradlinigen Verlauf aufweist, folgen. Die Bearbeitungsgrenze kann beispielsweise durch eine umlaufende Zentralspur des zu Beginn des Erntevorgangs erfolgenden Freischneidens gebildet werden. Die beim Freischneiden abgefahren Zentralspur begrenzt dann das zu bearbeitete Territorium.

Bei dem im Restflächenterritorium aufzunehmenden Erntegut kann es sich um einen abzuerntenden Erntegutbestand handeln. Das Abernten eines Erntegutbestands kann dabei bevorzugt durch einen selbstfahrenden Mähdrescher oder Feldhäcksler erfolgen.

Des Weiteren kann das im Restflächenterritorium aufzunehmende Erntegut zumindest ein Erntegutschwad sein. Die Aufnahme des Schwads kann dabei durch einen selbstfahrenden Feldhäcksler, eine Ballenpresse oder einen Ladewagen erfolgen.

Bevorzugt kann durch das Routenplanungssystem für den Betrieb im zweiten Modus zumindest eine Zentrierfahrspur für das zumindest eine Restflächenterritorium generiert und an das Spurführungssystem übertragen werden, wobei die zumindest eine Arbeitsmaschine durch das Spurführungssystem auf der zumindest einen Zentrierfahrspur geführt wird.

Weiterhin kann die zumindest eine Arbeitsmaschine durch das Spurführungssystem bis zum Erreichen einer durch das Routenplanungssystem generierten Fahrspur für den ersten Modus auf der zumindest einen Zentrierfahrspur des wenigstens einen Restflächenterritoriums und/oder dem Erreichen einer das wenigstens eine Restflächenterritorium begrenzenden Bearbeitungsgrenze geführt werden. Hierdurch kann die Nutzungsdauer des ersten Modus, in welchem im Wesentlichen die volle Arbeitsbreite des Erntevorsatzgerät verwendet werden kann, maximiert werden. Dies kann der Fall sein, wenn eine durch das Routenplanungssystem generierte Zentrierfahrspur in eine Fahrspur im zumindest einen Restflächenterritorium mündet, die einen temporären Betrieb des Erntevorsatzgerätes im ersten Modus ermöglicht.

Weiter bevorzugt kann die zumindest eine Zentrierfahrspur in Abhängigkeit von der Position und Ausrichtung des Erntevorsatzgerätes und der Geometrie des zumindest einen Restflächenterritoriums generiert werden. Position und Ausrichtung des Erntevorsatzgerätes ergeben sich aus der Fahrtrichtung, in welcher in das zumindest eine zu bearbeitende Territorium oder das jeweilige Restflächenterritorium gemäß der Routenplanung eingefahren werden soll. Die Geometrie des zumindest einen Restflächenterritoriums bestimmt sich unter anderem aus der Bearbeitungsgrenze des Territoriums. Weiterhin beeinflussen die Fahrspuren, entlang derer das Erntevorsatzgerät im ersten Modus betrieben wird, die Geometrie des zumindest einen Restflächenterritoriums.

Insbesondere können die Position und/oder Ausrichtung des Erntevorsatzgerätes bezüglich der Geometrie des zumindest einen Restflächenterritoriums mittels Signalen eines Positionsortungssensors und/oder mittels zumindest einer am Erntevorsatzgerät und/oder an der Arbeitsmaschine angeordneten Sensoreinrichtung durch das Spurführungssystem bestimmt werden. Die zumindest eine an der Arbeitsmaschine und/oder am Erntevorsatzgerät angeordnete Sensoreinrichtung kann beispielsweise ein Laserscanner und/oder eine Kamera und/oder eine sonstige Sensoreinrichtung sein, welche zur Detektion einer für die Einhaltung der Fahrspur durch das Spurführungssystem erforderliche Positionsbestimmung und/oder Bestimmung der Ausrichtung ermöglicht.

Gemäß einer Weiterbildung kann das Routenplanungssystem zur Überlappungsvermeidung mit einem Randbereich außerhalb der Bearbeitungsgrenze des zumindest einen Restflächenterritoriums zur Bestimmung der zumindest einen Zentrierfahrspur einen einzuhalten Abstand von mindestens einer halben Arbeitsbreite des Erntevorsatzgerätes zur Bearbeitungsgrenze verwenden. Eine Überlappungsvermeidung ist insbesondere bei der Ablage von durch die Arbeitsmaschine aufgenommenem Erntegut als Erntegutschwad erforderlich, um zu vermeiden, dass das vorherig als Erntegutschwad abgelegte Erntegut dem Vorsatzgerät erneut zugeführt wird. Hierzu kann vorgesehen sein, dass der einzuhaltende Abstand mindestens die Hälfte der Breite des Erntevorsatzgerätes sowie die Hälfte der Breite des Erntegutschwads beträgt.

Gemäß einem weiteren Aspekt bei der Ablage von Erntegutschwaden durch die Arbeitsmaschine ist vorgesehen, dass das Routenplanungssystem bereits liegende Erntegutschwaden berücksichtigt. Indem zur Bestimmung der zumindest einen Zentrierfahrspur bereits die vorangehenden Fahrtspuren mitberücksichtig werden, wird vermieden, dass das Erntegutschwad erneut durch die Arbeitsmaschine aufgenommen wird.

Bevorzugt kann durch das Routenplanungssystem bei einer parallelen Bearbeitung des Territoriums durch zumindest zwei Arbeitsmaschinen die Bearbeitung des zumindest einen Restflächenterritoriums der Arbeitsmaschine zugewiesen werden, deren Flächenleistung geringer ist.

Dabei kann durch das Routenplanungssystem die Arbeitsmaschine mit höherer Maschinenleistung für den Betrieb im ersten Modus und die Arbeitsmaschine mit niedrigerer Maschinenleistung für den Betrieb im zweiten Modus eingeplant werden.

Weiterhin kann durch das Routenplanungssystem die Arbeitsmaschine mit größerer Arbeitsbreite für den Betrieb im Wesentlichen im ersten Modus und die Arbeitsmaschine mit geringerer Arbeitsbreite für den Betrieb im Wesentlichen im zweiten Modus eingeplant werden.

Die eingangs gestellte Aufgabe wird weiterhin durch ein Routenplanungssystem mit den Merkmalen des nebengeordneten Anspruchs 13 gelöst.

Gemäß dem Anspruch 13 wird ein Routenplanungssystem zur Steuerung zumindest einer ein Erntevorsatzgerät zum Aufnehmen von Erntegut und ein Spurführungssystem umfassenden landwirtschaftlichen Arbeitsmaschine vorgeschlagen, wobei das Routenplanungssystem dazu eingerichtet ist, in Abhängigkeit von der Arbeitsbreite des Erntevorsatzgerätes von der landwirtschaftlichen Arbeitsmaschine in einem Territorium abzufahrende Fahrspuren zu generieren, wobei das Routenplanungssystem Fahrspuren generiert, in denen das Erntevorsatzgerät in einem ersten Modus, in welchem im Wesentlichen die volle Arbeitsbreite des Erntevorsatzgerät verwendbar ist, und in einem zweiten Modus, in dem eine Teilarbeitsbreite des Erntevorsatzgerät verwendbar ist, betreibbar ist, wobei das Routenplanungssystem das Territorium bei der Fahrspurplanung in zumindest ein im ersten Modus zu bearbeitendes Territorium und wenigstens ein im zweiten Modus zu bearbeitendes Restflächenterritorium unterteilt, wobei das Routenplanungssystem dazu eingerichtet ist, diejenigen Fahrspuren des Restflächenterritoriums zu identifizieren, auf welchen das Erntevorsatzgerät im zweiten Modus zu betreiben ist, und dass das Routenplanungssystem dazu eingerichtet ist, eine Änderung der Ausrichtung relativ zur jeweils identifizierten Fahrspur der landwirtschaftlichen Arbeitsmaschine in dem Restflächenterritorium in der Weise zu bewirken, dass das Erntevorsatzgerät das aufzunehmende Erntegut im Restflächenterritorium im Wesentlichen mittig aufnimmt. Auf alle Ausführungen zu dem vorschlagsgemäßen Verfahren darf verwiesen werden.

Das Routenplanungssystem kann als separates entferntes System ausgeführt sein, welches mit der zumindest einen landwirtschaftlichen Arbeitsmaschine im Datenaustausch steht. Bei einer Verwendung von zumindest zwei Arbeitsmaschinen kann das Routenplanungssystem dazu eingerichtet sein, deren Einsatz entsprechend der Unteransprüche 10 bis 12 koordinieren.

Nach einer weiteren Lehre gemäß Anspruch 14 wird eine landwirtschaftliche Arbeitsmaschine mit einem Erntevorsatzgerät zum Aufnehmen von Erntegut und einem Spurführungssystem zum Abfahren von durch ein Routenplanungssystem nach Anspruch 13 generierten Fahrspuren in einem Territorium, wobei die Arbeitsmaschine zur Durchführung des Verfahrens nach einem der Ansprüche 1 bis 12 eingerichtet ist, beansprucht.

Gemäß einer bevorzugten Weiterbildung kann das Routenplanungssystem Bestandteil eines Fahrerassistenzsystems der Arbeitsmaschine sein.

Die vorliegende Erfindung wird nachstehend anhand eines in den Zeichnungen dargestellten Ausführungsbeispieles näher erläutert.

Es zeigen:
- Fig. 1: schematisch und exemplarisch eine landwirtschaftliche Arbeitsmaschine auf einem zu bearbeitenden Territorium, welche mittels eines Routenplanungssystems bestimmte Fahrspuren abfährt;
- Fig. 2: schematisch und exemplarisch das Territorium gemäß Fig. 1 in beispielhafter Anwendung des erfindungsgemäßen Verfahrens zur Steuerung der Arbeitsmaschine;
- Fig. 3: schematisch eine vereinfachte Darstellung des Routenplanungssystems;
- Fig. 4: schematisch und exemplarisch ein Territorium mit einer asymmetrischen Kontur in beispielhafter Anwendung des erfindungsgemäßen Verfahrens zur Steuerung der Arbeitsmaschine;
- Fig. 5: schematisch und exemplarisch das Territorium gemäß Fig. 1 in beispielhafter Anwendung des erfindungsgemäßen Verfahrens zur Steuerung der Arbeitsmaschine bei der Ablage von Erntegut als Schwaden; und
- Fig. 6: schematisch und exemplarisch ein Territorium mit einer asymmetrischen Kontur in beispielhafter Anwendung des erfindungsgemäßen Verfahrens zur Steuerung zweier Arbeitsmaschinen.

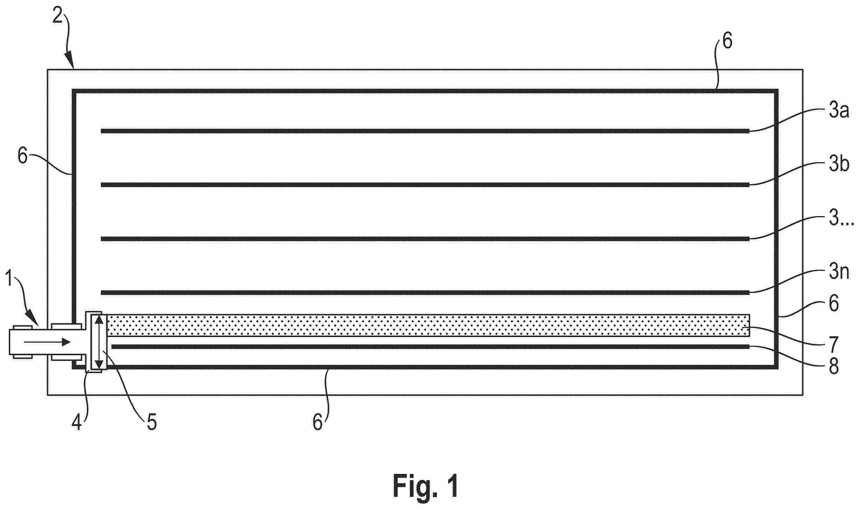

In der nachfolgenden Beschreibung der Figuren 1 bis 6 werden zur Erleichterung des Verständnisses der Erfindung für gleiche oder sich funktional entsprechende Elemente jeweils die gleichen Bezugszeichen verwendet.

Fig. 1 zeigt schematisch und exemplarisch eine Darstellung einer landwirtschaftlichen Arbeitsmaschine 1 auf einem Territorium 2, welche mittels eines Routenplanungssystems 10 bestimmte Fahrspuren 3a, 3b, ..., 3n abfährt. Die Lage der Fahrspuren 3 zueinander sowie zur das zu bearbeitende Territorium 2a begrenzenden Bearbeitungsgrenze 6 ist durch das Routenplanungssystem 10 in Abhängigkeit von einer Arbeitsbreite 5 eines an der Arbeitsmaschine 1 angeordneten Erntevorsatzgerät 4 bestimmt worden. Dem Routenplanungssystem 10 können die hierfür erforderlichen topografischen Informationen zum Territorium 2 mittels zumindest einer Datenbank zur Verfügung gestellt werden. Das Routenplanungssystem 10 kann eine solche Datenbank umfassen und/oder die erforderlichen topografischen Informationen zum Territorium 2 bei Bedarf aus externen Datenquellen abrufen. Die Arbeitsmaschine 1 umfasst ein Spurführungssystem 11, welches die Arbeitsmaschine 1 entlang der durch das Routenplanungssystem 10 bestimmten Fahrspuren 3a, 3b, ..., 3n, 8 führt. Die rechteckförmige Gestalt des Territoriums 2 respektive des zu bearbeitenden Territoriums 2a ist lediglich aus Vereinfachungsgründen gewählt. Grundsätzlich sind hiervon abweichende Formen von zu bearbeitenden Territorien 2a denkbar, wobei zumindest eine Bearbeitungsgrenze 6 beispielsweise einen gekrümmten oder geknickten Verlauf aufweisen kann. Die Fahrspuren 3a, 3b, ..., 3n, 8 sind dabei derart gelegt, dass zwischen diesen der durch die Arbeitsbreite 5 des zum Einsatz kommenden Erntevorsatzgerätes 4 bestimmte Abstand eingehalten wird sowie ein der halben Arbeitsbreite entsprechender Abstand zur Bearbeitungsgrenze 6, um das Überfahren von Bereichen außerhalb der Bearbeitungsgrenze 6 des zu bearbeitenden Territoriums 2a zu vermeiden.

In Fig. 1 ist weiterhin ein Restflächenterritorium 7 innerhalb des Territoriums 2 schraffiert dargestellt, auf welchem sich noch abzuerntendes bzw. aufzunehmendes Erntegut befindet. Die Breite des Restflächenterritoriums 7 ist im dargestellten Ausführungsbeispiel geringer als die Arbeitsbreite 5 des Erntevorsatzgerätes 4, die der Routenplanung durch das Routenplanungssystem 10 zugrunde gelegt wurde. Das Abfahren der Fahrspur 8, um das Erntegut im Restflächenterritorium 7 aufzunehmen bzw. abzuernten, hat eine einseitige Aufnahme des Erntegutes durch das Erntevorsatzgerät 4 zur Folge.

Die ungleichmäßige respektive asymmetrische Aufnahme von Erntegut beim Abfahren der Fahrspur 8 zur Aufnahme des Erntegutes im Restflächenterritorium 7 gemäß der vorstehend beschriebenen Steuerung der Arbeitsmaschine 1 geht mit einer entsprechend einseitigen Belastung von Arbeitsaggregaten der Arbeitsmaschine 1 einher, welchen das vom Erntevorsatzgerät 4 aufgenommene Erntegut zugeführt wird. Aus der einseitigen Belastung können erhöhte Erntegutverluste bereits bei der Aufnahme von Erntegut auftreten. Eine Erhöhung von Erntegutverlusten kann in Abhängigkeit von der Art der Arbeitsmaschine 1 und ihrer Arbeitsaggregate auch bei den nachfolgenden Bearbeitungsschritten auftreten, die von den jeweiligen Arbeitsaggregaten auszuführen sind. Die einseitige Belastung kann zudem die Qualität von der Erntegutaufnahme nachfolgenden Bearbeitungsschritten beeinflussen, die von der Arbeitsmaschine 1 selbst oder einer nachfolgend das Territorium 2 bearbeitenden Arbeitsmaschine durchgeführt werden.

Bei der landwirtschaftlichen Arbeitsmaschine 1 handelt es um selbstfahrende Arbeitsmaschinen 1, wozu Zugmaschinen, welche gezogene Erntemaschinen, insbesondere Ballenpressen oder Ladewagen, ziehen und antreiben, sowie selbstfahrende Erntemaschinen, insbesondere Mähdrescher oder Feldhäcksler, gehören.

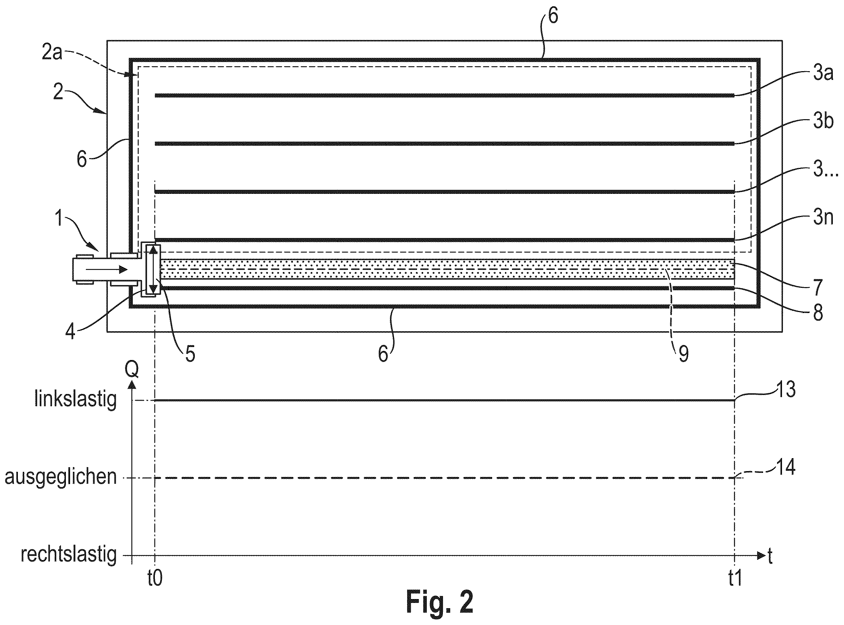

Die Darstellung in Fig. 2 zeigt schematisch und exemplarisch das Territorium 2 gemäß Fig. 1 in beispielhafter Anwendung des erfindungsgemäßen Verfahrens zur Steuerung der Arbeitsmaschine 1.

Das vorschlagsgemäße Verfahren zur Steuerung der zumindest einen das Erntevorsatzgerät 4 zum Aufnehmen von Erntegut und das Spurführungssystem 11 umfassenden landwirtschaftlichen Arbeitsmaschine 1 sieht vor, dass von der landwirtschaftlichen Arbeitsmaschine 1 in dem zu bearbeitenden Territorium 2 abzufahrende Fahrspuren 3a, 3b, ..., 3n, 8 von dem Routenplanungssystem 10 in Abhängigkeit von der Arbeitsbreite 5 des Erntevorsatzgerätes 4 generiert werden. Dabei generiert das Routenplanungssystem 10 die Fahrspuren 3a, 3b, ..., 3n, in denen das Erntevorsatzgerät 4 in einem ersten Modus, in welchem im Wesentlichen die volle Arbeitsbreite 5 des Erntevorsatzgerät 4 verwendet wird, betrieben wird. Weiterhin generiert das Routenplanungssystem 10 zumindest eine Fahrspur 8, auf der das Erntevorsatzgerät 4 in einem zweiten Modus, in dem eine Teilarbeitsbreite des Erntevorsatzgerät 4 verwendet wird, betrieben wird. Das Territorium 2 wird durch das Routenplanungssystem 10 bei der Fahrspurplanung in zumindest ein im ersten Modus zu bearbeitendes Territorium 2a und wenigstens ein im zweiten Modus zu bearbeitendes Restflächenterritorium 7 unterteilt. Das zumindest eine zu bearbeitende Territorium 2a innerhalb des Territoriums 2 ist durch eine strichlinierte Umrandung hervorgehoben.

Vorschlagsgemäß ist vorgesehen, dass durch das Routenplanungssystem 10 zumindest die eine Fahrspur 8 des zumindest einen Restflächenterritoriums 7 identifiziert wird, auf welcher das Erntevorsatzgerät 4 im zweiten Modus betrieben wird. Durch das Routenplanungssystem 10 wird eine Änderung der Ausrichtung relativ zur jeweils identifizierten Fahrspur 8 der landwirtschaftlichen Arbeitsmaschine 1 in dem Restflächenterritorium 7 in der Weise bewirkt wird, dass das aufzunehmende Erntegut im wenigstens einen Restflächenterritorium 7 dem Erntevorsatzgerät 4 im Wesentlichen mittig zugeführt wird.

Bei der vereinfacht als Rechteck dargestellten exemplarischen Form des zu bearbeitende Territoriums 2a ergibt sich ein paralleler Versatz zur identifizierten Fahrspur 8, um das aufzunehmende Erntegut im wenigstens einen Restflächenterritorium 7 dem Erntevorsatzgerät 4 im Wesentlichen mittig zuzuführen. Die Arbeitsmaschine 1 wird dabei bevorzugt durch das Spurführungssystem 11, welchem das Routenplanungssystem 10 entsprechende Spurführungssignale bereitstellen kann, ausgerichtet und geführt, damit dem Erntevorsatzgerät 4 das Erntegut im zumindest einen Restflächenterritorium 7 im Wesentlichen mittig zugeführt wird.

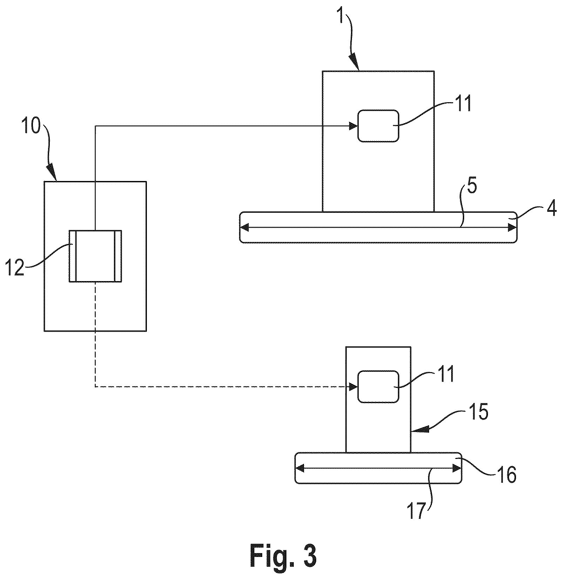

Fig. 3 zeigt schematisch eine vereinfachte Darstellung des Routenplanungssystems 10. Eine Recheneinheit des Routenplanungssystems 10 ist zur Verarbeitung eines Analysealgorithmus 12 ausgeführt. Die in dem zu bearbeitenden Territorium 2a abzufahrenden Fahrspuren 3a, 3b, ..., 3n, 8 werden durch den Analysealgorithmus 12 analysiert. Der Analysealgorithmus 12 ist in das Routenplanungssystem 10 implementiert. Durch den Analysealgorithmus 12 werden die Fahrspuren 8 auf dem zumindest einen Restflächenterritorium 7 bestimmt, auf welchen das Erntevorsatzgerät 4 im zweiten Modus betrieben wird. Die Fahrspuren 3a, 3b, ...3n, 8 sowie die Spurführungssignale zur Ansteuerung der Ausrichtung werden an das Spurführungssystem 11 der Arbeitsmaschine 1 übertragen, bevorzugt bevor die Arbeitsmaschine 1 das Territorium 2 befährt.

Die zumindest eine Zentrierfahrspur 9 wird bevorzugt in Abhängigkeit von der Position und Ausrichtung des Erntevorsatzgerätes 4 und der Geometrie des zumindest einen Restflächenterritoriums 7 generiert. Position und Ausrichtung des Erntevorsatzgerätes 4 können sich insbesondere aus der Fahrtrichtung ergeben, in welcher in das jeweilige Restflächenterritorium 7 gemäß der Routenplanung eingefahren werden soll. Die Geometrie des zumindest einen Restflächenterritoriums 7 bestimmt sich unter anderem aus der Bearbeitungsgrenze 6 des Territoriums 2. Weiterhin beeinflussen die Fahrspuren 3a, 3b, ..., 3n, entlang derer das Erntevorsatzgerät 4 im ersten Modus betrieben wird, die Geometrie des zumindest einen Restflächenterritoriums 7.

Die Position und/oder Ausrichtung des Erntevorsatzgerätes 4 bezüglich der Geometrie des zumindest einen Restflächenterritoriums 7 kann mittels Signalen eines Positionsortungssensors an der Arbeitsmaschine oder dem Erntevorsatzgerät 4 und/oder mittels zumindest einer am Erntevorsatzgerät 4 und/oder an der Arbeitsmaschine 1 angeordneten Sensoreinrichtung durch das Spurführungssystem 11 bestimmt werden. Die zumindest eine an der Arbeitsmaschine 1 angeordnete Sensoreinrichtung kann beispielsweise ein Laserscanner und/oder eine Kamera und/oder eine sonstige Sensoreinrichtung sein, welche zur Detektion einer für die Einhaltung der Fahrspur 8 bzw. der Zentrierfahrspur 9 durch das Spurführungssystem 11 erforderliche Positionsbestimmung und/oder Bestimmung der Ausrichtung ermöglicht.

Bei dem im zumindest einen Restflächenterritorium 7 aufzunehmenden Erntegut kann es sich um einen abzuerntenden Erntegutbestand handeln. Hierzu kann die Arbeitsmaschine 1 als selbstfahrende Erntemaschine, insbesondere Mähdrescher oder Feldhäcksler ausgeführt sein.

Weiterhin kann das im zumindest einen Restflächenterritorium 7 aufzunehmende Erntegut zumindest ein Erntegutschwad sein. Hierbei kann die Arbeitsmaschine 1 als Zugmaschine mit gezogener und angetriebener Erntemaschine, beispielsweise einer Ballenpresse oder ein Ladewagen, oder als selbstfahrender Feldhäcksler ausgeführt sein.

Die Arbeitsmaschine 1 wird bevorzugt durch das Spurführungssystem 11 entlang zumindest einer Zentrierfahrspur 9 geführt, welche durch das Routenplanungssystem 10 für den Betrieb des Erntevorsatzgerätes 4 im zweiten Modus für das zumindest eine Restflächenterritorium 7 generiert wird. Die zumindest eine Zentrierfahrspur 9 wird an das Spurführungssystem 11 übertragen. Die zumindest eine Arbeitsmaschine 1 wird durch das Spurführungssystem 11 auf der zumindest einen Zentrierfahrspur 9 geführt. Die Lage der in Fig. 2 strichliniert dargestellten Zentrierfahrspur 9 ist zur Fahrspur 8 im Restflächenterritorium 7 parallel verschoben, so dass das im zweiten Modus betriebene Erntevorsatzgerät 4 das Erntegut im Wesentlichen zentriert aufnimmt. Das Abfahren der in Fig. 2 exemplarisch dargestellten Fahrspur 8 hätte dagegen zur Folge, dass eine linkslastige Querverteilung Q einstellen würde.

Unterhalb der Darstellung des zu bearbeitenden Territoriums 2a ist ein Diagramm dargestellt, welches den Verlauf einer Querverteilung Q bei der Aufnahme von Erntegut in dem zumindest einen Restflächenterritorium 7 über die Zeit t wiedergibt. Mit t0 ist ein Zeitpunkt bezeichnet, ab dem die Zentrierfahrspur 9 befahren wird und mit t1 ist ein Zeitpunkt bezeichnet, an welchem die Zentrierfahrspur 9 von der Arbeitsmaschine 1 verlassen wird. Gegenübergestellt sind ein Verlauf 13 bei sich einstellender linkslastiger Querverteilung 13 bei der Aufnahme von Erntegut durch das Erntevorsatzgerät 4 beim Abfahren der Fahrspur 8, wie in Fig. 1 dargestellt, und ein im Wesentlichen ausgeglichener Verlauf 14 der Querverteilung Q der Aufnahme von Erntegut durch das Erntevorsatzgerät 4 beim Abfahren der durch das Routenplanungssystem 10 für das zumindest eine Restflächenterritorium 7 generierten Zentrierfahrspur 9 gemäß Fig. 2.

Die im Wesentlichen ausgeglichene Querverteilung Q gemäß dem Verlauf 14 der Aufnahme von Erntegut wirkt sich auf nachfolgende Bearbeitungsprozesse, die von der Arbeitsmaschine 1, insbesondere einer Erntemaschine, ausgeführt werden, positiv aus, da die Zuführung des Erntegut zu dem Erntevorsatzgerät 4 nachgeordneten Arbeitsaggregaten der Arbeitsmaschine 1 ebenfalls mit einer gleichmäßigeren Querverteilung Q erfolgt. Insbesondere kann dadurch im Wesentlichen die gesamte bauraumspezifische Arbeitsbreite der nachgeordneten Arbeitsaggregate der Arbeitsmaschine 1 genutzt werden, was sich positiv auf Leistung und/oder Erntegutverluste auswirkt.

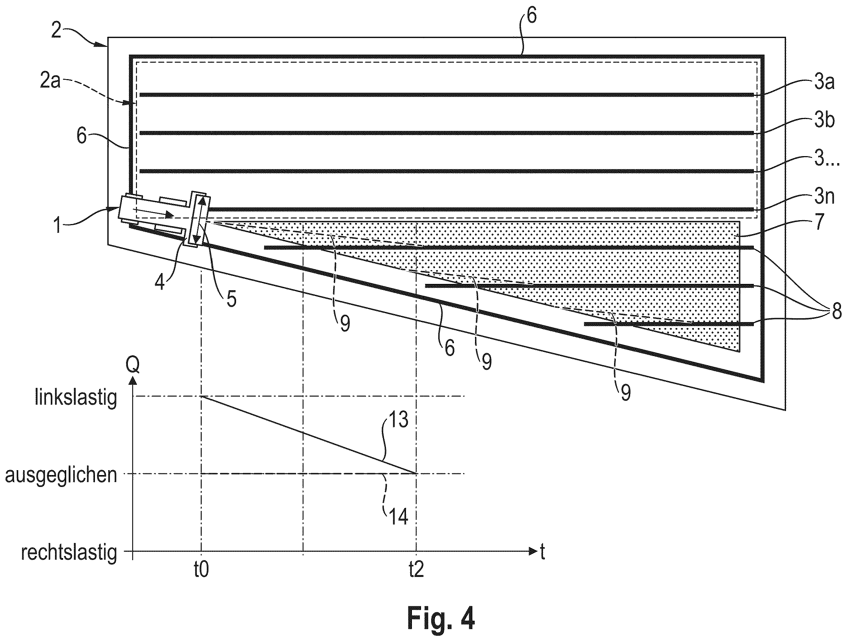

Die Darstellung in Fig. 4 zeigt schematisch und exemplarisch ein Territorium 2 mit einer asymmetrischen Kontur in beispielhafter Anwendung des erfindungsgemäßen Verfahrens zur Steuerung der Arbeitsmaschine 1.

Aufgrund der exemplarisch dargestellten Kontur des Territoriums 2 bildet sich ein keilförmiges Restflächenterritorium 7 aus, welches, unter Berücksichtigung der Arbeitsbreite 5, beispielsweise drei im zweiten Modus abzufahrende Fahrspuren 8 aufweist, um das Restflächenterritorium 7 abzuernten. Um eine zentrierende Zuführung des aufgenommenen Erntegutes durch das Erntevorsatzgerät 4 zu erreichen, werden für das Restflächenterritorium 7 mehrere Zentrierfahrspuren 9 bestimmt, gemäß der die Änderung der Ausrichtung relativ zur jeweils identifizierten Fahrspur 8 der landwirtschaftlichen Arbeitsmaschine 1 in dem Restflächenterritorium 7 bewirkt wird.

Im Unterschied zu dem in Fig. 2 gezeigten Ausführungsbeispiel erstreckt sich die jeweilige Zentrierfahrspur 9 nicht über die gesamte Länge des Restflächenterritoriums 7, sondern mündet in die Fahrspur 8, wenn die Breite des Restflächenterritoriums 7 den Betrieb im ersten Modus des Vorsatzgerätes 4 temporär ermöglicht. Die zumindest eine Arbeitsmaschine 1 wird vorschlagsgemäß durch das Spurführungssystem 11 bis zum Erreichen einer durch das Routenplanungssystem 10 generierten Fahrspur 8 für den ersten Modus auf der zumindest einen Zentrierfahrspur 9 und/oder dem Erreichen einer das zumindest eine Restflächenterritorium 7 begrenzenden Bearbeitungsgrenze 6 geführt.

Analog zur Darstellung in Fig. 2 ist auch in Fig. 4 unterhalb der Darstellung des zu bearbeitenden Territoriums 2a ein Diagramm dargestellt, welches den Verlauf der Querverteilung Q bei der Aufnahme von Erntegut in dem zumindest einen Restflächenterritorium 7 über die Zeit t wiedergibt. Mit t0 ist ein Zeitpunkt bezeichnet, ab dem eine der Zentrierfahrspuren 9 befahren wird und mit t2 ist ein Zeitpunkt bezeichnet, an welchem die Zentrierfahrspur 9 von der Arbeitsmaschine 1 verlassen und die durch den Analysealgorithmus 12 bestimmte Fahrspur 8 im Restflächenterritorium 7 erreicht wird, welche den temporären Betrieb des Vorsatzgerätes 4 im ersten Modus ermöglicht. Zwischen dem Zeitpunkt t0 und t2 wird entlang der Zentrierfahrspur 9 geführt und das Vorsatzgerätes 4 im zweiten Modus betrieben. Ab dem Zeitpunkt t2 kann das Vorsatzgerätes 4 im ersten Modus betrieben werden, bis das Ende des Restflächenterritoriums 7 und/oder die Bearbeitungsgrenze 6 erreicht wird.

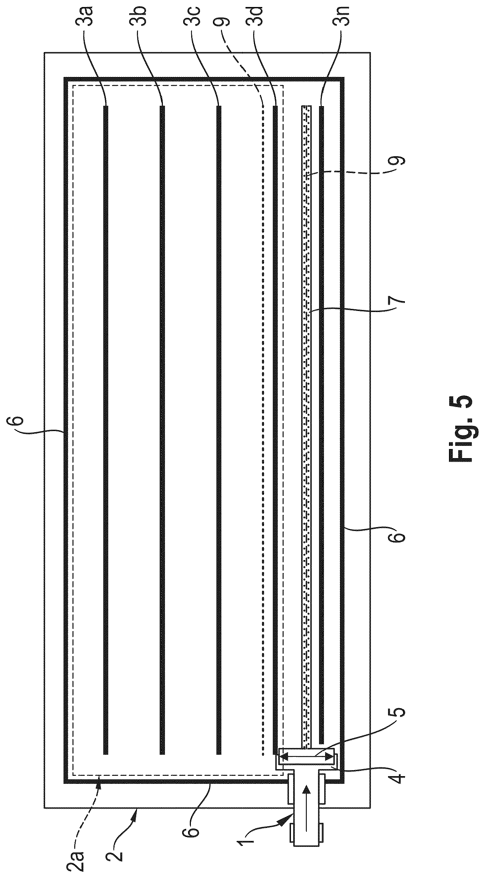

Die Darstellung in Fig. 5 zeigt schematisch und exemplarisch das Territorium 2 gemäß Fig. 1 in beispielhafter Anwendung des erfindungsgemäßen Verfahrens zur Steuerung der Arbeitsmaschine 1 bei der Ablage von Erntegut als Schwaden. Bei der Schwadablage durch die Arbeitsmaschine 1 nach der Aufnahme des Erntegutes durch das Erntevorsatzgerät 4 ist zu berücksichtigen, dass eine wiederholte Aufnahme eines auf einer vorangehenden Fahrspur 3a bis 3d bereits abgelegten Schwads vermieden wird. Entsprechend müssen bei der Routenplanung durch das Routenplanungssystem 10 bereits vorangehende Fahrspuren 3a bis 3d mitberücksichtigt werden, um die Lage der Zentrierfahrspuren 9 zueinander festzulegen.

Das Abfahren der letzten Fahrspur 3n im ersten Modus würde zu einer rechtslastigen Querverteilung Q bei der Bearbeitung des Erntegutes zur Schwadablage durch das Erntevorsatzgerät 4 und die Arbeitsmaschine 1 führen, damit der erforderliche Abstand zur Bearbeitungsgrenze 6 eingehalten wird.

Das vorschlagsgemäße Verfahren sieht in einer Weiterbildung vor, die Lage der zur Fahrspur 3n parallelen Zentrierfahrspur 9 unter Berücksichtigung des einzuhalten Abstands zur Bearbeitungsgrenze 6 und der vorangehenden Zentrierfahrspur 9 zu bestimmen.

In Fig. 3 ist weiterhin zumindest eine weitere Arbeitsmaschine 15 mit einem Erntevorsatzgerät 16 zum Aufnehmen von Erntegut und ein Spurführungssystem 11 darstellt. Das Erntevorsatzgerät 16 weist eine Arbeitsbreite 17 auf, welche kleiner als die Arbeitsbreite 5 des Erntevorsatzgerät 4 der Arbeitsmaschine 1 ist. Die zumindest weitere Arbeitsmaschine 15 empfängt ebenfalls die von dem Routenplanungssystem 10 mittels des Analysealgorithmus 12 bestimmte zumindest eine Fahrspur 8 sowie zumindest eine Zentrierfuhrspur 9 für das zumindest eine Restflächenterritorium 7 sowie die zugehörigen Spurführungssignale zur Anpassung der Ausrichtung.

Dabei kann durch das Routenplanungssystem 10 bei einer zeitgleichen Bearbeitung des Territoriums 2 durch die zumindest zwei Arbeitsmaschinen 1, 15 die Bearbeitung des zumindest einen Restflächenterritoriums 7 der Arbeitsmaschine 1, 15 zugewiesen werden, deren Flächenleistung geringer ist. Im dargestellten Ausführungsbeispiel ist das die Arbeitsmaschine 15.

So kann durch das Routenplanungssystem 10 die Arbeitsmaschine 1 mit höherer Maschinenleistung für den Betrieb im Wesentlichen im ersten Modus und die Arbeitsmaschine 15 mit niedrigerer Maschinenleistung für den Betrieb im Wesentlichen im zweiten Modus eingeplant werden.

Des Weiteren kann durch das Routenplanungssystem 10 die Arbeitsmaschine 1 mit größerer Arbeitsbreite 5 für den Betrieb im Wesentlichen im ersten Modus und die Arbeitsmaschine 15 mit geringerer Arbeitsbreite 17 für den Betrieb im Wesentlichen im zweiten Modus eingeplant werden.

Im Falle einer aus zumindest zwei Arbeitsmaschinen 1, 15 gebildeten Maschinenflotte ist es daher sinnvoll, das zu bearbeitende Territorium 2a und das zumindest eine Restflächenterritorium 7 in Abhängigkeit von der Maschinenleistung in Feldsegmente 18, 19, 20 zu unterteilen und der leistungsstärkeren Maschine 1 die günstigeren Feldsegmente 18, 19 des zu bearbeitende Territorium 2a zuzuordnen, in denen das Erntevorsatzgerät 4 im Wesentlichen im ersten Modus betrieben werden kann, während die leistungsschwächere Arbeitsmaschine 15 einen größeren Anteil von Feldsegmenten 20 in dem zumindest einen Restflächenterritorium 7 bearbeitet, auf welchen das Erntevorsatzgerät 16 im Wesentlichen im zweiten Modus betrieben wird.

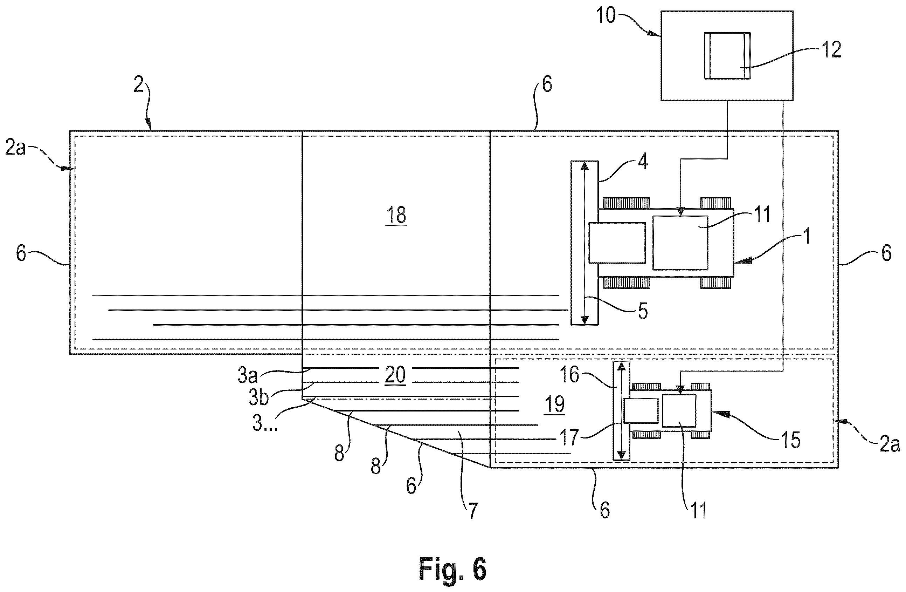

Mit einer alternativen Strategie kann die Unterscheidung, welche Arbeitsmaschine 1, 15 in welchem der beiden Modi betrieben wird, in der unterschiedlichen Arbeitsbreite 5 bzw. 17 des Erntevorsatzgerätes 4 bzw. 15 liegen. **In** kleineren Feldsegmenten 20 lässt sich das zu bearbeitende Territorium 2a und das zumindest eine Restflächenterritorium 7 durch den Analysealgorithmus 12 mit einer kleineren Arbeitsbreite 17 des Erntevorsatzgerätes 15 besser aufteilen, wie beispielhaft in Fig. 6 dargestellt.

Die Darstellung in Fig. 6 zeigt schematisch und exemplarisch ein Territorium 2 mit einer asymmetrischen Kontur in beispielhafter Anwendung des erfindungsgemäßen Verfahrens zur Steuerung zweier Arbeitsmaschinen 1, 15.

Gemäß einer Weiterbildung kann das Routenplanungssystem 10 Bestandteil eines Fahrerassistenzsystems der zumindest einen Arbeitsmaschine 1, 15 sein.

### Bezugszeichenliste

- 1: Arbeitsmaschine
- 2: Territorium
- 2a: Territorium
- 3a...3n: Fahrspur
- 4: Arbeitsbreite
- 5: Erntevorsatzgerät
- 6: Bearbeitungsgrenze
- 7: Restflächenterritorium
- 8: Fahrspur
- 9: Zentrierfahrspur
- 10: Routenplanungssystem
- 11: Spurführungssystem
- 12: Analysealgorithmus
- 13: Verlauf Querverteilung
- 14: Verlauf Querverteilung
- 15: Arbeitsmaschine
- 16: Erntevorsatzgerät
- 17: Arbeitsbreite
- 18: Feldsegment
- 19: Feldsegment
- 20: Feldsegment

- Q: Querverteilung
- t: Zeit
- t0,t1,t2: Zeitpunkt

## Patentansprüche

1. Verfahren zur Steuerung zumindest einer ein Erntevorsatzgerät (4, 16) zum Aufnehmen von Erntegut und ein Spurführungssystem (11) umfassenden landwirtschaftlichen Arbeitsmaschine (1, 15), wobei von der landwirtschaftlichen Arbeitsmaschine (1, 15) in einem Territorium (2) abzufahrende Fahrspuren (3a, 3b, ..., 3n, 8) von einem Routenplanungssystem (10) in Abhängigkeit von der Arbeitsbreite (5, 17) des Erntevorsatzgerätes (4, 16) generiert werden, wobei das Routenplanungssystem (10) die Fahrspuren (3a, 3b, ..., 3n) generiert, in denen das Erntevorsatzgerät (4, 16) in einem ersten Modus, in welchem im Wesentlichen die volle Arbeitsbreite (5, 17) des Erntevorsatzgerät (4, 16) verwendet wird, und die Fahrspuren (8), in denen das Erntevorsatzgerät (4, 16) in einem zweiten Modus, in dem eine Teilarbeitsbreite des Erntevorsatzgerät (4, 16) verwendet wird, betrieben wird, wobei das Territorium (2) durch das Routenplanungssystem (10) bei der Fahrspurplanung in zumindest ein im ersten Modus zu bearbeitendes Territorium (2a) und wenigstens ein im zweiten Modus zu bearbeitendes Restflächenterritorium (7) unterteilt wird, **dadurch gekennzeichnet, dass** durch das Routenplanungssystem (10) diejenigen Fahrspuren (8) des Restflächenterritoriums (7) identifiziert werden, auf welchen das Erntevorsatzgerät (4, 16) im zweiten Modus betrieben wird, und dass durch das Routenplanungssystem (10) eine Änderung der Ausrichtung relativ zur jeweils identifizierten Fahrspur (8) der landwirtschaftlichen Arbeitsmaschine (1, 15) in dem Restflächenterritorium (7) in der Weise bewirkt wird, dass das aufzunehmende Erntegut im wenigstens einen Restflächenterritorium (7) dem Erntevorsatzgerät (4, 16) im Wesentlichen mittig zugeführt wird.

2. Verfahren nach Anspruch 1, **dadurch gekennzeichnet, dass** die in dem zu bearbeitenden Territorium (2a) abzufahrenden Fahrspuren (3a, 3b, ..., 3n, 8) durch einen Analysealgorithmus (12) analysiert werden, wobei durch den Analysealgorithmus (12) die Fahrspuren (8) bestimmt werden, auf welchen das Erntevorsatzgerät (4, 16) im zweiten Modus betrieben wird.

3. Verfahren nach Anspruch 1 oder 2, **dadurch gekennzeichnet, dass** das im Restflächenterritorium (7) aufzunehmende Erntegut ein abzuerntender Erntegutbestand ist.

4. Verfahren nach einem der Ansprüche 1 bis 3, **dadurch gekennzeichnet, dass** das im Restflächenterritorium (7) aufzunehmende Erntegut zumindest ein Erntegutschwad ist.

5. Verfahren nach einem der vorangehenden Ansprüche, **dadurch gekennzeichnet, dass** durch das Routenplanungssystem (10) für den Betrieb im zweiten Modus zumindest eine Zentrierfahrspur (9) für das zumindest eine Restflächenterritorium (7) generiert und an das Spurführungssystem (11) übertragen wird, wobei die zumindest eine Arbeitsmaschine (1, 15) durch das Spurführungssystem (11) auf der zumindest einen Zentrierfahrspur (9) geführt wird.

6. Verfahren nach Anspruch 5, **dadurch gekennzeichnet, dass** die zumindest eine Arbeitsmaschine (1, 15) durch das Spurführungssystem (11) bis zum Erreichen einer durch das Routenplanungssystem (10) generierten Fahrspur (8) des zumindest einen Restflächenterritoriums (7), für den ersten Modus auf der zumindest einen Zentrierfahrspur (9) und/oder dem Erreichen einer das zumindest eine Restflächenterritorium (7) begrenzenden Bearbeitungsgrenze (6) geführt wird.

7. Verfahren nach Anspruch 5 oder 6, **dadurch gekennzeichnet, dass** die zumindest einen Zentrierfahrspur (9) in Abhängigkeit von der Position und Ausrichtung des Erntevorsatzgerätes (4, 16) und der Geometrie des zumindest einen Restflächenterritoriums (7) generiert wird.

8. Verfahren nach Anspruch 7, **dadurch gekennzeichnet, dass** die Position und/oder Ausrichtung des Erntevorsatzgerätes (4, 16) bezüglich der Geometrie des zumindest einen Restflächenterritoriums (7) mittels Signalen eines Positionsortungssensors und/oder mittels zumindest einer am Erntevorsatzgerät (4, 16) und/oder an der Arbeitsmaschine (1, 15) angeordneten Sensoreinrichtung durch das Spurführungssystem (11) bestimmt wird.

9. Verfahren nach einem der vorangehenden Ansprüche, **dadurch gekennzeichnet, dass** das Routenplanungssystem (10) zur Überlappungsvermeidung mit einem Randbereich außerhalb der Bearbeitungsgrenze (6) des zumindest einen Restflächenterritoriums (7) zur Bestimmung der zumindest einen Zentrierfahrspur (7) einen einzuhalten Abstand von mindestens einer halben Arbeitsbreite des Erntevorsatzgerätes (4, 16) zur Bearbeitungsgrenze (6) verwendet.

10. Verfahren nach einem der vorangehenden Ansprüche, **dadurch gekennzeichnet, dass** durch das Routenplanungssystem (10) bei einer parallelen Bearbeitung des Territoriums (2) durch zumindest zwei Arbeitsmaschinen (1, 15) die Bearbeitung des zumindest einen Restflächenterritoriums (7) der Arbeitsmaschine (1, 15) zugewiesen wird, deren Flächenleistung geringer ist.

11. Verfahren nach Anspruch 10, **dadurch gekennzeichnet, dass** durch das Routenplanungssystem (10) die Arbeitsmaschine (1, 15) mit höherer Maschinenleistung für den Betrieb im ersten Modus und die Arbeitsmaschine (1, 15) mit niedrigerer Maschinenleistung für den Betrieb im zweiten Modus eingeplant wird.

12. Verfahren nach Anspruch 10 oder 11, **dadurch gekennzeichnet, dass** durch das Routenplanungssystem (10) die Arbeitsmaschine (1, 15) mit größerer Arbeitsbreite (5, 17) für den Betrieb im ersten Modus und die Arbeitsmaschine (1, 15) mit geringerer Arbeitsbreite (4, 17) für den Betrieb im zweiten Modus eingeplant wird.

13. Routenplanungssystem (10) zur Steuerung zumindest einer ein Erntevorsatzgerät (4, 16) zum Aufnehmen von Erntegut und ein Spurführungssystem (11) umfassenden landwirtschaftlichen Arbeitsmaschine(1, 15), wobei das Routenplanungssystem (10) dazu eingerichtet ist, in Abhängigkeit von der Arbeitsbreite (5, 17) des Erntevorsatzgerätes (4, 16) von der landwirtschaftlichen Arbeitsmaschine (1, 15) in einem Territorium (2) abzufahrende Fahrspuren (3a, 3b, ... 3n, 8) zu generieren, wobei das Routenplanungssystem (10) Fahrspuren (3a, 3b, ... 3n) generiert, in denen das Erntevorsatzgerät (4, 16) in einem ersten Modus, in welchem im Wesentlichen die volle Arbeitsbreite (5, 17) des Erntevorsatzgerät (4, 16) verwendbar ist, und in einem zweiten Modus, in dem eine Teilarbeitsbreite des Erntevorsatzgerät (4, 16) verwendbar ist, betreibbar ist, wobei das Routenplanungssystem (10) das Territorium (2) bei der Fahrspurplanung in zumindest ein im ersten Modus zu bearbeitendes Territorium (2a) und wenigstens ein im zweiten Modus zu bearbeitendes Restflächenterritorium (7) unterteilt, **dadurch gekennzeichnet, dass** das Routenplanungssystem (10) dazu eingerichtet ist, diejenigen Fahrspuren (8) des Restflächenterritoriums (7) zu identifizieren, auf welchen das Erntevorsatzgerät (4, 16) im zweiten Modus zu betreiben ist, und dass das Routenplanungssystem (10) dazu eingerichtet ist, eine Änderung der Ausrichtung relativ zur jeweils identifizierten Fahrspur (8) der landwirtschaftlichen Arbeitsmaschine (1, 15) in dem Restflächenterritorium (7) in der Weise zu bewirken, dass das Erntevorsatzgerät (4, 16) das aufzunehmende Erntegut im Restflächenterritorium (7) im Wesentlichen mittig aufnimmt.

14. Landwirtschaftliche Arbeitsmaschine (1, 15), mit einem Erntevorsatzgerät (4, 16) zum Aufnehmen von Erntegut und einem Spurführungssystem (11) zum Abfahren von durch ein Routenplanungssystem (13) nach Anspruch 13 generierten Fahrspuren (3a, 3b, ... 3n, 8) in einem Territorium (2) , wobei die Arbeitsmaschine (1, 15) zur Durchführung des Verfahrens nach einem der Ansprüche 1 bis 12 eingerichtet ist.

15. Landwirtschaftliche Arbeitsmaschine (1, 15) nach Anspruch 14, dass das Routenplanungssystem (10) Bestandteil eines Fahrerassistenzsystems der Arbeitsmaschine (1, 15) ist.
